# EUROPEAN PATENT SPECIFICATION

(11) **EP 2 743 560 B1**
(45) Date of publication and mention of the grant of the patent: **13.01.2016**
(21) Application number: 13196766.3
(22) Date of filing: 11.12.2013
(51) Int. Cl.: F16M 11/04, F16L 1/024, H02G 1/06, B65H 49/32, F16L 1/20, H02G 1/10

(54) **Apparatus for unwinding flexible cables on seabeds and method for loading a reel of flexible cable on said apparatus**
Vorrichtung zum Abwickeln von flexiblen Kabeln auf Meeresböden und Verfahren zum Laden einer Spule eines flexiblen Kabels auf diese Vorrichtung
Appareil permettant de dérouler des câbles souples sur fonds marins et procédé de chargement d'un dévidoir de câble flexible sur ledit appareil

(30) Priority: 11.12.2012 IT PD20120374
(43) Date of publication of application: 18.06.2014
(73) Proprietor: Innovo Engineering and Construction LTD, Aberdeen AB10 1UQ (GB)
(72) Inventor: Tiberio, Andrea, 35020 Albignasego (PD) (IT); Malagodi, Stefano, 25019 Sirmione (BS) (IT)
(74) Representative: Gallo, Luca

(56) References cited:
- WO-A2-2009/022177
- US-A1- 2010 104 374
- US-A1- 2012 217 690

## Description

### Field of application

The present invention regards an apparatus for unwinding flexible cables on seabeds and a method for loading a reel of flexible cable on said apparatus according to the preamble of the respective independent claims.

The present apparatus is intended to be mounted on ships for unwinding, on a seabed, a reel of flexible cable, such as an energy transmission cable, a signal cable for data transmission (e.g. made of optical fiber), a flexible tube and more generally a flexible umbilical cord for many different applications. The cables associated with the apparatus, object of the present invention, can thus be constituted by any one elongated flexible element intended to be laid offshore and typically having a diameter comprised between 4 and 8 inches and a weight comprised between 20 and 50 kg per linear meter.

Therefore, the apparatus and the method, object of the present invention, fall within the industrial field of production of offshore equipment and are intended for use in the field of laying flexible cables on beds of seas, lakes, basins etc.

### State of the art

As is known, the apparatuses for unwinding the cables on seabeds conventionally comprise a reel for winding and/or unwinding a flexible cable and a support structure formed by a base block and by two shoulders, which rise for several meters parallel to each other starting from the base block, and which rotatably support a reel between them.

More in detail, each shoulder is preferably obtained by means of two parallel and counter-facing towers, between which a hub-carrying group that supports the shaft of the reel is slidably engaged in opposite guides.

The reel is usually constituted by a drum with the cable externally wound thereon, which is rotated by motor means directly mounted on the hub-carrying group.

At least two vertical hydraulic pistons are provided for, each of which mounted between the two towers of each shoulder for the lifting and lowering of the reel between a lowered loading position and a raised work position.

Two horizontal hydraulic pistons are also provided for, mounted on the base block, in order to move the two shoulders towards or away from each other along rails.

In operation, in order to load a reel on the apparatus the following sequence of operations is generally provided for.

First, a reel is loaded that is supported by a metalwork saddle on the deck of a ship, by means of a crane, preferably a wharf crane, and then the reel is moved on the saddle by means of for example the lateral crane of the deck of the ship, between the two shoulders of the apparatus previously moved apart from each other in order to allow the interposition of the reel. At this point, the hub-carrying groups are vertically lifted by the vertical pistons until they are counter-facing, in a precise manner, with the ends of the drum of the reel. The two shoulders are then brought close together by means of the actuation of the horizontal pistons, in order to bring the pinions of the hub-carrying groups to engage provided ring gears integral with the drum of the reel, as well as to bring the support shafts for the hub-carrying groups to rotatably engage in the respective bearings of the drum of the reel.

At the end of the process of mounting on the apparatus for its unwinding, the reel must be situated at a height of several dozen centimeters from the base block for its controlled rotation and for the unwinding of the cable on the seabed.

As is known, the reels of flexible cable have considerable weight, typically hundreds of tons, and the length and radius (hence height) sizes can vary as a function of the manufacturing company, of the characteristics of the cable to be unwound and the length of the latter.

The apparatuses for unwinding cables must therefore be able to receive reels of different sizes and allow their loading and unloading in a safe and quick manner.

In particular, in fact, on a same ship multiple reels of different sizes can be loaded on board, each mounted on its own saddle; such reels must then in sequence be unwound on the seabed in order to release the relative cable.

The apparatuses of known type currently only partly meet the need of the market to ensure versatility of use of reels having different size characteristics and in particular with different radius. For such purpose, the apparatuses of known type generally provide vertical pistons for lifting and lowering the reels between the work and loading/unloading positions, provided with a limited travel, typically about one meter length. Such circumstance involves a sizing of the pistons that negatively affects the costs of the apparatus. In addition, a similar limited travel is not sufficient for covering the entire size range of the reels present on the market, such that it is often necessary to provide for multiple apparatuses, each intended for unwinding reels comprised within a preset size interval, with clear increase of costs.

The adjustment capacity of the currently known apparatuses is therefore limited to the travel of the lifting pistons, which as stated is usually about a meter. Such adjustment capacity also depends on the height of the metalwork of the apparatus with respect to the deck of the ship.

In order to overcome this drawback, it is for example known to employ spacers to be associated with the support saddles of the reels in order to vary the height thereof from the ground within values reachable by the lifting pistons, with however clearly high costs and considerable problems for the substitution of a reel with another of different size.

Document US 2012/0217690 discloses a clay model support device comprising a base block provided with two upper shoulders spaced apart from each other, and a support frame positioned between the shoulders and hinged thereof for pivoting about a horizontal axis.

Furthermore, the clay model support device comprises a panel connected with the support frame and configured to support a clay model.

More in detail, the support frame comprises two parallel rails with which the panel is slidably engaged. Each rail is provided with a plurality of locking apertures which are spaced along the longitudinal extension of the rail and are able to receive inside a locking pin of the panel to fix the latter with respect to the support frame.

The clay model support device disclosed in US 2012/0217690 does not belong to the field of offshore equipments and does not face the drawbacks of the above mentioned known apparatuses for unwinding flexible cables.

### Presentation of the invention:

The problem underlying the present invention is therefore that of overcoming the drawbacks of the abovementioned prior art, by providing an apparatus for unwinding flexible cables on seabeds which is capable of working in a versatile manner with reels of very different sizes.

Further object of the present invention is to provide an apparatus for unwinding flexible cables on seabeds which provides means for lifting the reels capable of working with reels of different sizes, in an entirely safe manner and entirely reliable in operation.

Another object of the present invention is to provide a method for loading/unloading a reel of flexible cable on/from an apparatus for the unwinding thereof, which can be employed in a versatile manner for reels of different sizes.

Another object of the present invention is to provide a method for loading/unloading a reel of flexible cable on/from an apparatus for the unwinding thereof, which is entirely safe and can in particular also be actuated in open sea.

### Brief description of the drawings

The technical characteristics of the finding, according to the aforesaid objects, can be clearly found in the contents of the below-reported claims and the advantages thereof will be more evident in the following detailed description, made with reference to the enclosed drawings, which represent two merely exemplifying and non-limiting embodiments of the invention, in which:

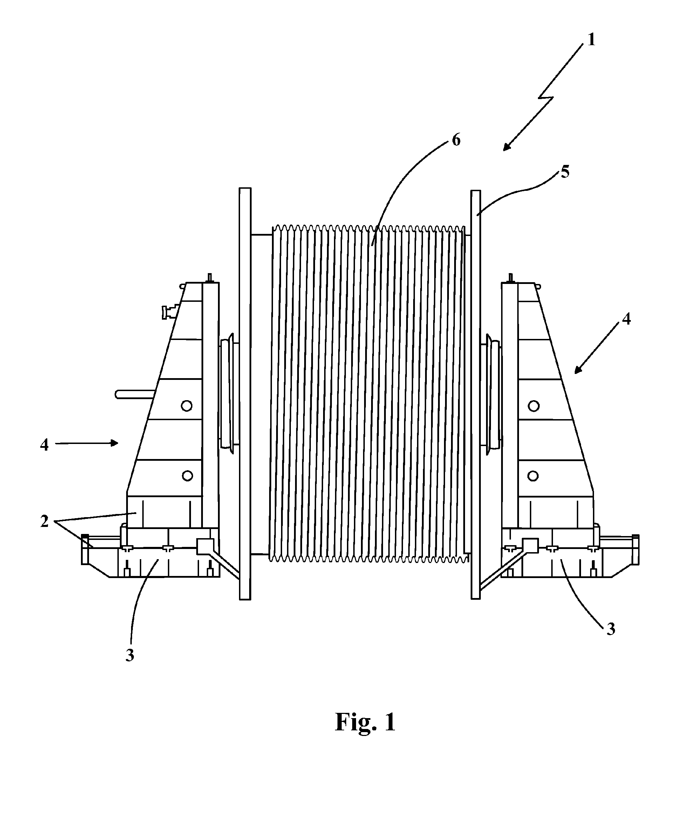

Fig. 1 shows a front view of an apparatus for unwinding flexible cables of the type that is object of the present invention;
Fig. 2A shows a front perspective view of an apparatus for unwinding flexible cables, object of the present invention;
Fig. 2B shows a front perspective view of an apparatus for unwinding flexible cables, object of the present invention;
Fig. 3 shows a front view of a shoulder and of several members mounted thereon of the apparatus for unwinding flexible cables on seabeds, object of the present invention;
Fig. 4 shows a side view of the shoulder and the members of figure 3;

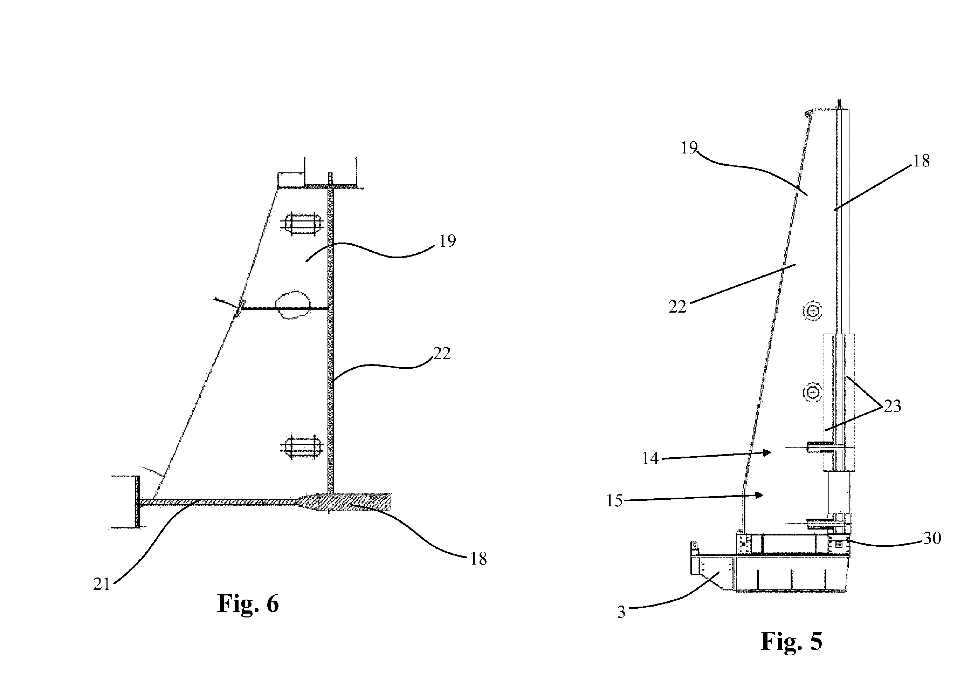

Fig. 5 shows a longitudinal section view of just the shoulder of figure 3 carried out along the line V-V of the same figure 3;
Fig. 6 shows a cross section view of just the shoulder of figure 4 carried out along the line VI-VI of the same figure 4;

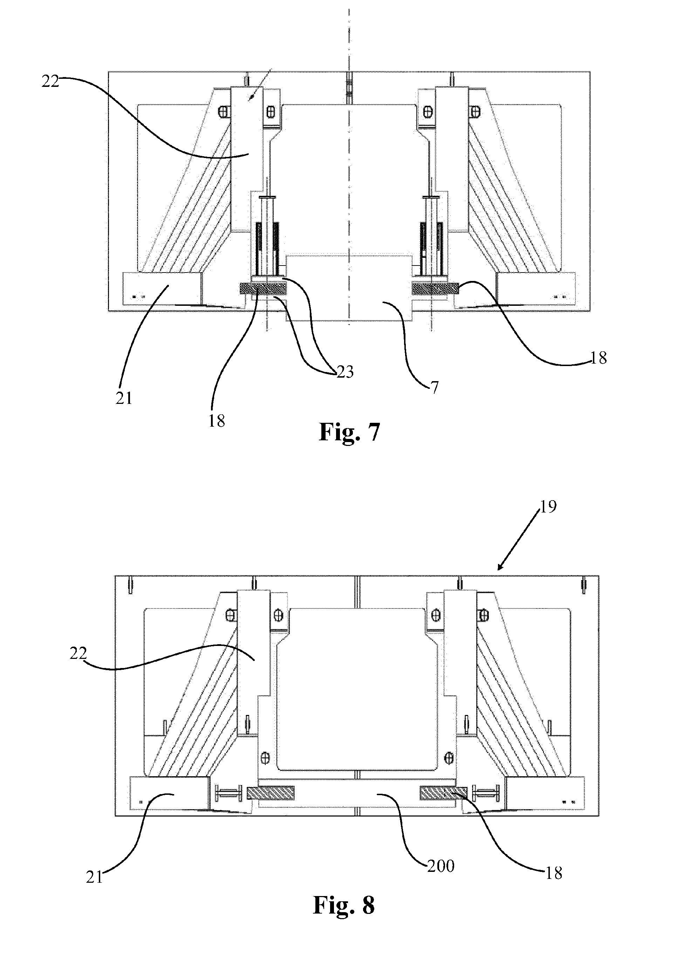

Fig. 7 shows a cross section view of the shoulder and the members of figure 3 carried out along the line VII-VII of the same figure 3;
Fig. 8 shows a cross section view of the shoulder of figure 3 carried out along the line VIII-VIII of the same figure 3;
Fig. 9 shows a front view of a detail of the apparatus, object of the present invention, relative to a hub-carrying group, to first actuators and to one reaction bar;
Fig. 10 shows a side view of the members of figure 9;

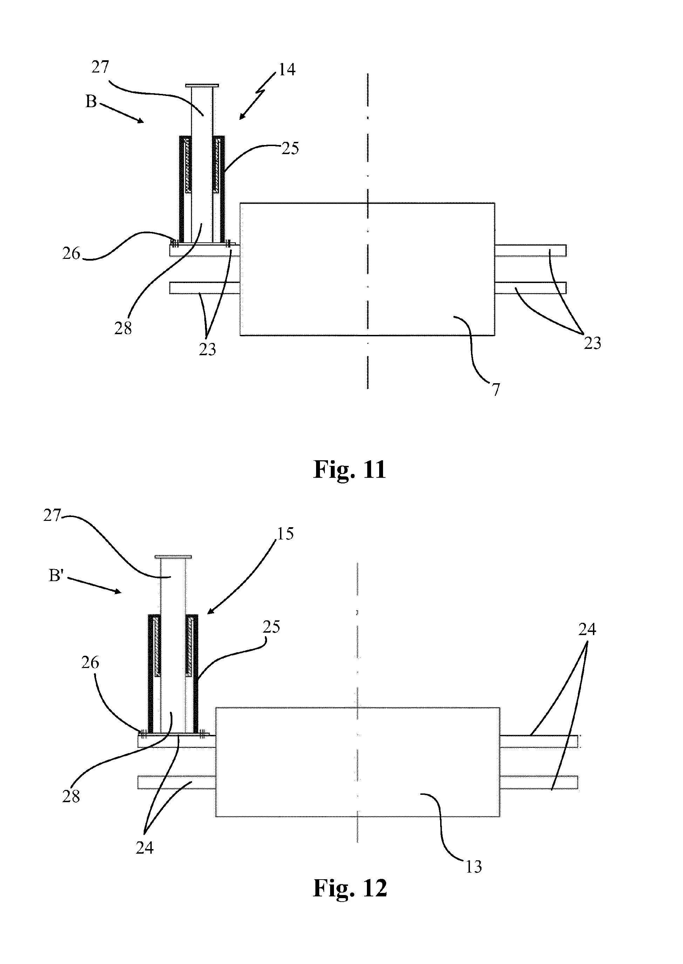

Fig. 11 shows a schematic view in cross section of a detail of the apparatus, object of the present invention, relative to first locking means mounted on the hub-carrying group;
Fig. 12 shows a schematic view in cross section of a detail of the apparatus, object of the present invention, relative to second locking means mounted on the reaction bar;
Fig. 13 shows a shoulder of the apparatus, object of the present invention, with the movable members arranged in a first mechanical configuration and illustrated in the minimum height position thereof;
Fig. 14 shows a side view of the shoulder and the members of figure 13;
Fig. 15 shows a shoulder of the apparatus, object of the present invention, with the movable members arranged in the first mechanical configuration and illustrated in the maximum height position thereof;
Fig. 16 shows a side view of the shoulder and the members of figure 15;
Fig. 17 shows a shoulder of the apparatus, object of the present invention, with the movable members arranged in a second mechanical configuration and illustrated in the minimum height position thereof;
Fig. 18 shows a side view of the shoulder and the members of figure 17;
Fig. 19 shows a shoulder of the apparatus, object of the present invention, with the movable members arranged in the second mechanical configuration and illustrated in the maximum height position thereof;
Fig. 20 shows a side view of the shoulder and the members of figure 19;
Figs. 21A, 22A, 21B, 22B show a shoulder of the apparatus, object of the present invention, with the movable members arranged in the first mechanical configuration and illustrated in an intermediate height position thereof with two first movement actuators respectively illustrated in collected position and in extended position in a front view in (Fig. 21A, 22A) and in a rear view (Fig. 21B, 22B);
Figs. 23, 24 show a shoulder of the apparatus, object of the present invention, with the movable members arranged in the second mechanical configuration and illustrated at a front part in an intermediate height position thereof with two first movement actuators respectively in collected position and in extended position;
Figs. 25A - 31B schematically show an operating sequence of steps for the movement of the movable members of the apparatus for unwinding flexible cables on seabeds, object of the present invention.

### Detailed description of a preferred embodiment

With reference to the set of drawings, reference number 1 indicates overall an apparatus for unwinding flexible cables on seabeds.

The apparatus 1 for unwinding flexible cables on seabeds comprises, in a *per se* known manner, a support structure 2 provided with a base block 3 and with two shoulders 4, which rise from the base block 3 parallel to each other in a substantially vertical extension direction.

The two shoulders 4 are spaced apart for a distance sufficient to house a reel 5 for storing a flexible cable 6.

The cable storage reel 5 is provided, in an entirely conventional manner, with a steel drum with substantially cylindrical shape, which is horizontally extended between two ends carrying the flexible cable 6 externally wound thereon.

The latter can consist of an energy transmission cable, a signal cable for data transmission (e.g. made of optical fiber), and a flexible tube and more generally it can consist of a flexible umbilical cord, or more generally by a flexible elongated body intended for many different applications.

Each shoulder 4 is mechanically associated with a hub-carrying group 7, which is adapted to transmit the motion to the reel 5 as well as to support the reel on the corresponding shoulder 4.

Each hub-carrying group 7 is slidably guided to move along a corresponding shoulder 4 in the vertical extension direction Y, and is susceptible to being mechanically engaged at one end to the reel 5.

For such purpose, the hub-carrying group 7 preferably comprises a metallic support body 8 with box-like shape, for example substantially with parallelepiped form, which centrally and rotatably carries a motion transmission hub 9 mounted thereon. Such hub 9 has the shape of a cylindrical body, peripherally provided with notches 10 adapted to be coupled in corresponding teeth obtained on the internal profile of a connection flange (not illustrated since of type *per se* known to the man skilled in the art) fixed to the end of the drum of the reel 5, in order to transmit the rotation thereto for the winding and unwinding of the cable 6.

On the support body 8 of the hub-carrying group 7, a shaft is centrally fixed which, by traversing the transmission hub 9, is rotatably engaged in a bearing fixed on the end flange of the drum of the reel 5.

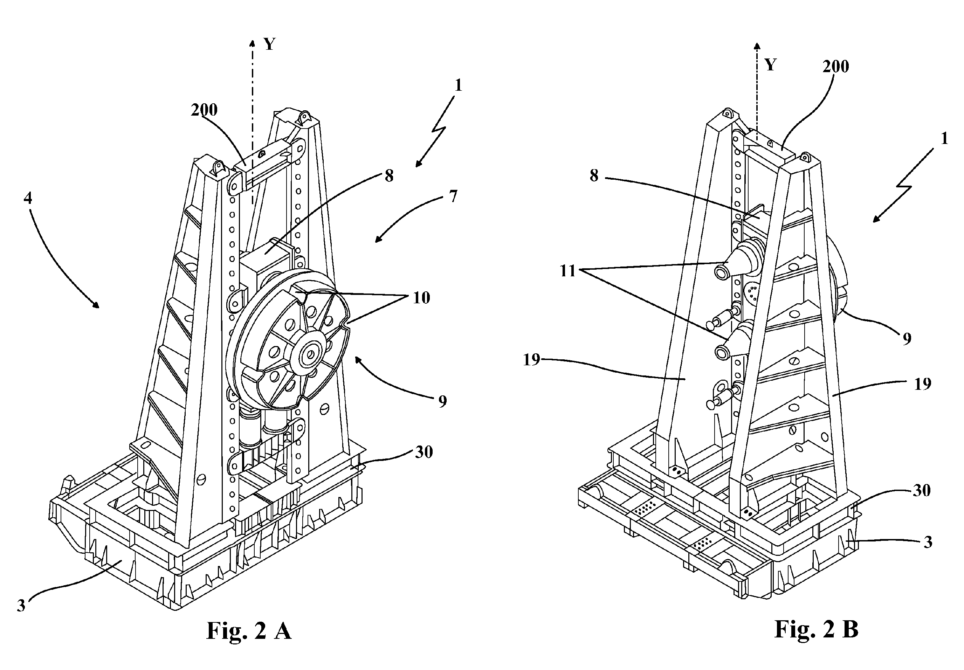

On the support body 8 of the hub-carrying group 7, at least one motor 11 of electric or hydraulic type 11 is also mounted, which engages with a pinion in a toothed wheel provided for inside the transmission hub 9, in order to rotate the latter and the reel 5 therewith. Preferably, in accordance with the embodiment of figure 2B, two motors 11 are provided for, arranged in diametrically opposite positions with respect to the central shaft in order to engage with the relative pinions in two diametrically opposite positions of the transmission hub 9.

Both the hub-carrying groups 7 associated with the two shoulders 4 can be motorized, i.e. a motorized master hub-carrying group and a following slave hub-carrying group can be provided for.

According to the idea underlying the present invention, the apparatus 1 further comprises, for each shoulder 4, a plurality of anchoring elements 12 arranged aligned in sequence along the direction Y of vertical extension of the same shoulder 4.

Also provided for are two reaction bars 13, each of which slidably mechanically guided on a corresponding shoulder 4 in order to move along the aforesaid vertical extension direction Y.

Each hub-carrying group 7 supports first locking means 14 able to be actuated to move between a first interference position A, in which the first locking means 14 intercept at least one anchoring element 12 of the relative shoulder 4, constraining the hub-carrying group 7 to the shoulder 4 itself with respect to movements along the vertical extension direction Y, and a first non-interference position B, in which such first locking means 14 are released from the anchoring elements 12 of the shoulder 4, freeing the hub-carrying group 7 from the shoulder 4 in order to allow movements thereof along the vertical extension direction Y.

Two second locking means 15 are each mounted on a corresponding reaction bar 13 associated with one shoulder 4, and are able to be actuated to move between a second interference position A', in which the second locking means 15 intercept at least one anchoring element 12 of the shoulder 4, constraining the reaction bar 13 to the shoulder 4 itself with respect to movements along the vertical extension direction Y, and a second non-interference position B', in which the second locking means 15 are released from the anchoring elements 12 at the shoulder 4, freeing the reaction bar 13 from the shoulder 4 itself in order to allow movements thereof along the vertical extension direction Y.

The apparatus 1 further comprises at least two first movement actuators 16, each associated with one shoulder 4 and each mounted between the relative hub-carrying group 7 and a corresponding reaction bar 13, in order to modify the distance between them when, selectively, a member selected from among the hub-carrying group 7 and the reaction bar 13 has the corresponding locking means 14, 15 in non-interference position B, B', so as to allow the movement thereof under the action of the corresponding first actuator 16.

Preferably, in order to balance the forces, two first movement actuators 16 are provided for, associated with each shoulder 4 and, as described hereinbelow, housed within the seat 20 defined between the two towers 19 provided with each shoulder 4.

The first movement actuator 16 associated with one shoulder 4 can be controlled to be extended, in order to move the hub-carrying group 7 and the reaction bar 13 away from each other, or it can be controlled to be shortened, in order to move the hub-carrying group 7 and the reaction bar 13 closer together. Of course, as indicated above, in order to allow each first actuator 16 to be extended or shortened, at least one of the two members movable in a guided manner along the shoulder 4, or at least one from among the hub-carrying group 7 and the reaction bar 13, must be released from the shoulder 4 in order to be able to slide thereon along the vertical direction Y, having the corresponding locking means 14 or 15 mounted in non-interference position B, B'. In this manner, the other movable member 13, 7 will instead be constrained to the shoulder 4, having the corresponding locking means 14 or 15 mounted in interference position A, A' in order to allow the reaction first actuator 16 by unloading the force on the shoulder 4 of the support structure 2.

The movement of one of the two movable members 7, 13, produced by the first actuators 16, can correspond to the distance that separates two anchoring elements 12 and advantageously can be equal to the segment that separates two successive anchoring elements 12, so as to allow the locking elements 14, 15 to mechanically constrain the movable member 7, 13 to the shoulder 4, after such member has been moved and has reached the new displaced position of such predefined segment, along the vertical direction Y.

In this manner, it is possible to move the two movable members 7, 13 with successive travel segments (advantageously equal to the distance between two anchoring elements 12 or for a multiple travel of such distance). Of course, given the limited travel of the first actuators 16, in order to be able to repeat the movement of a first movable member 7, 13 in a same sense of the vertical movement direction Y, it will be necessary to first recover the second member 13, 7, making the two members approach each other by an equal segment through the collection actuation of the first actuators 16, after having suitably released the locking means of such second movable member.

The weight of the reel 5, which usually can be several hundred tons, lies on the two hub-carrying groups 7. The movement of the reel 5 can therefore occur with low pitches (in both senses of the vertical direction Y) of extension preferably equal to the distance between two anchoring elements 12, coming to recover, after each movement pitch of the reel 5 (i.e. of the hub-carrying group 7), the reaction bar 13 in order to progressively constrain it with the relative locking means 14, 15 in new positions defined by the sequence of aligned anchoring elements 12.

The operative function of the apparatus whose structure is described above will be clearer in the description reported below of the method for loading the reel 5 on an apparatus 1 for unwinding flexible cables 6 on seabeds.

In accordance with a preferred embodiment of the present invention, the anchoring elements 12 consist of a plurality of aligned holes provided for on at least one substantially vertical wall of each shoulder 4.

The holes 12 are extended along the vertical extension direction of the shoulder 4 and are spaced apart from each other, preferably in a constant manner, by a segment D, advantageously on the order of 20-40 cm.

Preferably, each shoulder 4 is formed by two parallel towers 19, which together with the base block 3 delimit a seat 20, at whose interior the corresponding hub-carrying group 7 is housed.

Each tower 19 is obtained with a metalwork structure, preferably comprising a front wall 21, which is vertically extended from the base block 2, and a rear wall 22 which is also vertically extended and is orthogonally fixed behind the front wall 21. Between the aforesaid two walls 21, 22, a plurality of metal reinforcing brackets can be provided for.

The two towers 19 that make up a shoulder 4 are connected at the upper end by a small reinforcing beam 200 which at the upper part closes the seat 20; they are connected at the lower part by a base 30 which rests on the base block 2. Between the base block 2 and the shoulder 4, or preferably between the base block 2 and the base 30 of the shoulder 4, at least one second actuator 31 (and preferably two second actuators 31) is mechanically connected, which is susceptible to move the two shoulders 4 towards or away from each other. For such purpose, the base 30 rests on the base block 2 preferably by means of a rail (not illustrated in detail in the drawings).

The aforesaid towers 19 are provided with two first guides, counter-facing each other, in which a corresponding hub-carrying group 7 is slidably engaged, and two second guides in which a corresponding reaction bar 13 is slidably engaged.

Advantageously the aforesaid guides are both obtained with a single projecting wall 18 placed as a continuation of the front wall 21 with a portion with increased thickness, which is extended, starting from the rear wall 22, inside the seat 20 towards the opposite tower 19.

Such projecting wall 18 carries, advantageously associated, the aforesaid plurality of anchoring elements 12 preferably consisting, as stated, of aligned holes arranged at constant distance D along the extension of the wall 18 in the vertical extension direction Y of the shoulder 4.

The aforesaid projecting wall 18 is susceptible to externally guide two parallel and laterally fixed first plates 23, projecting at each support body 8 of the hub-carrying group 7, as well as two parallel, laterally fixed second plates 24 projecting at each reaction bar 13.

The first and the second locking means 14, 15, mentioned above, and respectively associated with the hub-carrying group 7 and the reaction bar 13, are each advantageously obtained with at least one third actuator provided with a fixed jacket 25, respectively made integral with the hub-carrying group 7 and with the reaction bar 13 by means of a connection flange 26; such third actuator is also provided with a movable stem 27 carrying an associated stop element 28 able to be actuated to project towards the shoulder 4 in order to interfere with the anchoring elements 12 when the first or the second locking means 14, 15 are actuated respectively to move into the first or into the second interference position A, A'.

Each third actuator 14, 15 can be advantageously obtained with a cylinder with through stem 27 whose end portion acts as stop element 28.

Advantageously, in accordance with the embodiment illustrated in the enclosed figures, the first locking means 14, associated with each hub-carrying group 7, are obtained with a third actuator of through stem type, mounted fixed, by means of the aforesaid connection flange 26, to one of the two lateral ends of the support body 8 of the hub-carrying group 7 on one of the two parallel first plates 23 with the through stem aligned on the sequence of aligned holes 12 obtained on the projecting wall 18 interposed between the two parallel first plates 23 in order to guide them along the vertical direction Y.

Analogously, in accordance with the embodiment illustrated in the enclosed figures, the second locking means 15 associated with each reaction bar 13 are obtained with a third actuator of through stem type, mounted fixed, by means of the aforesaid connection flange 26, to one of the two parallel second plates 24 laterally fixed to the reaction bar 13, with the through stem aligned on the sequence of holes 12 obtained on the projecting wall 18 interposed between the two parallel second plates 24 in order to guide them along the vertical direction Y.

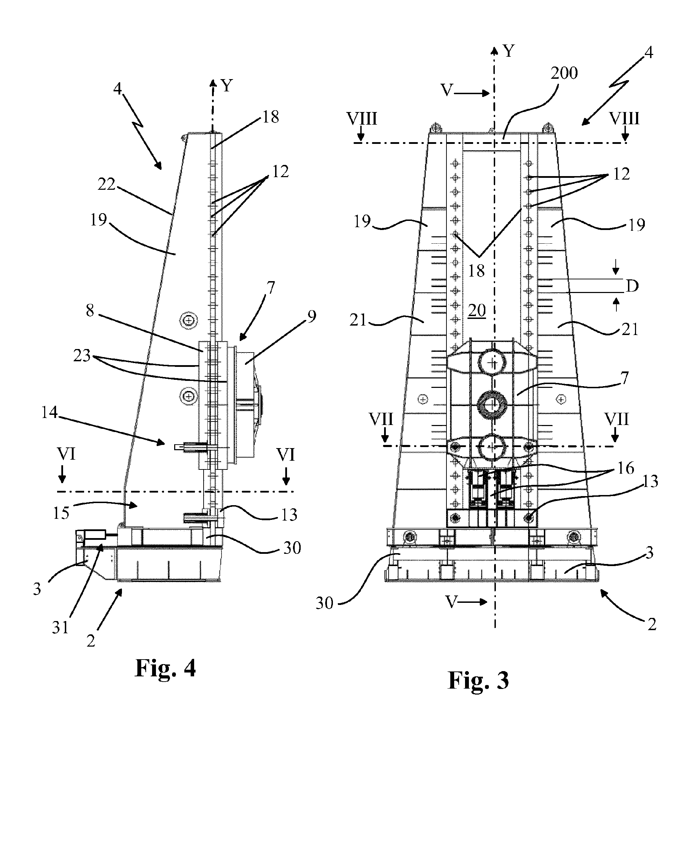

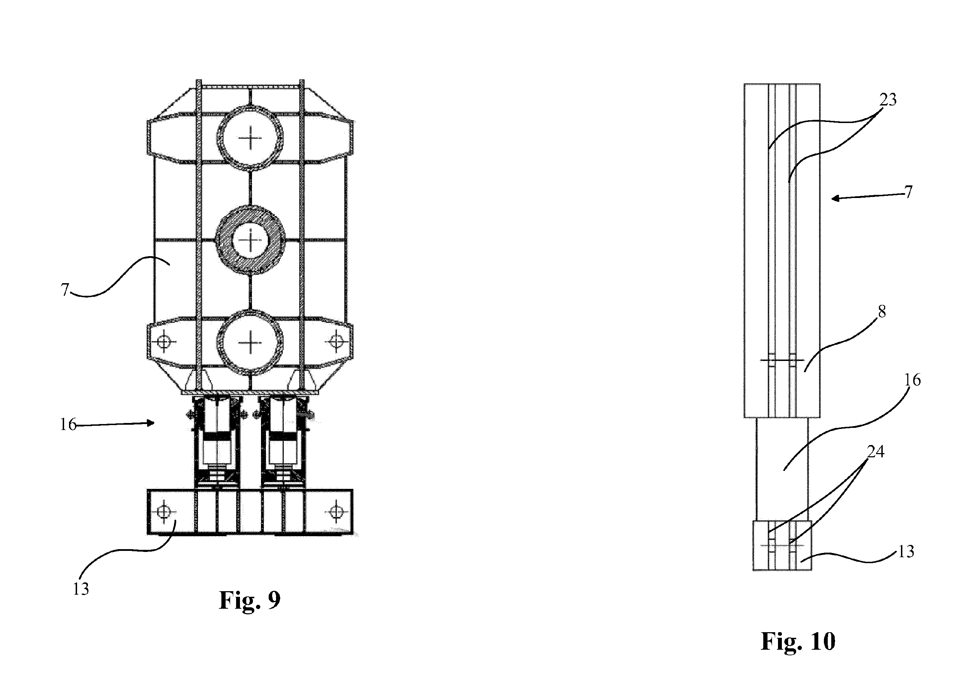

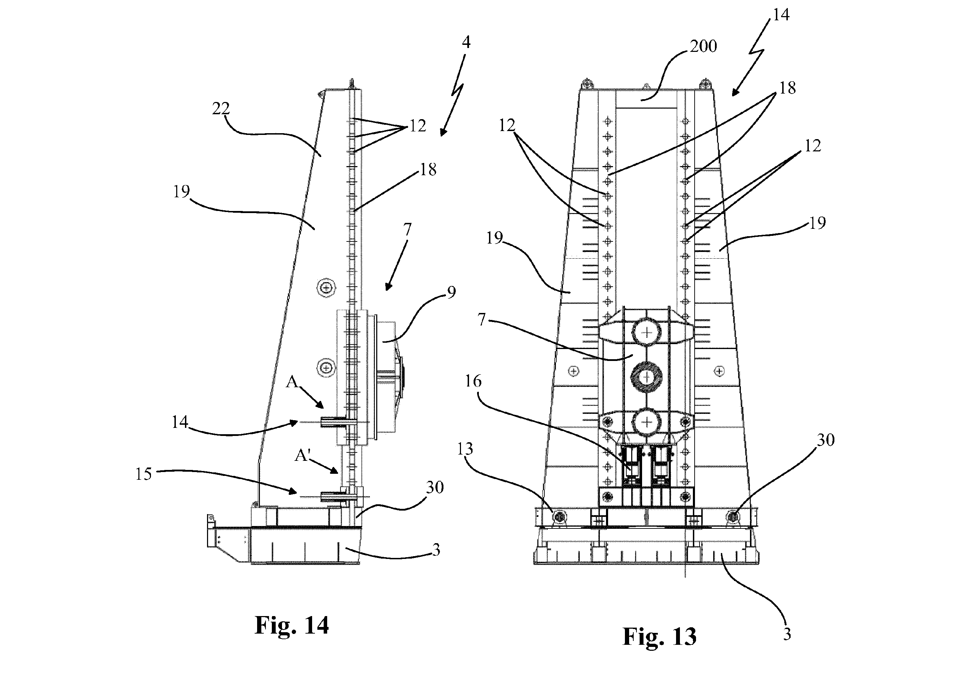

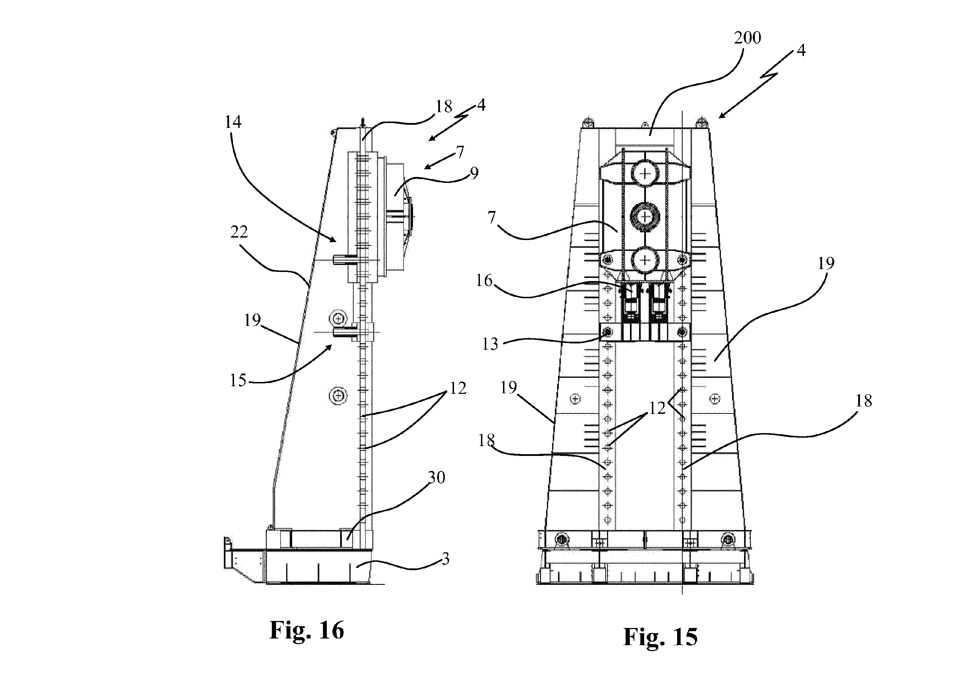

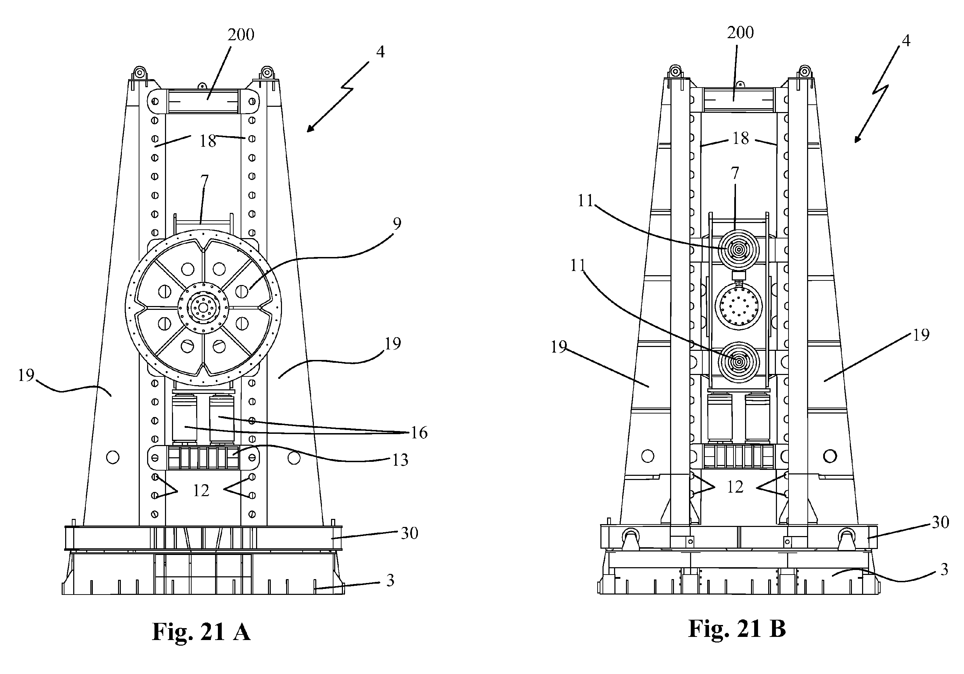

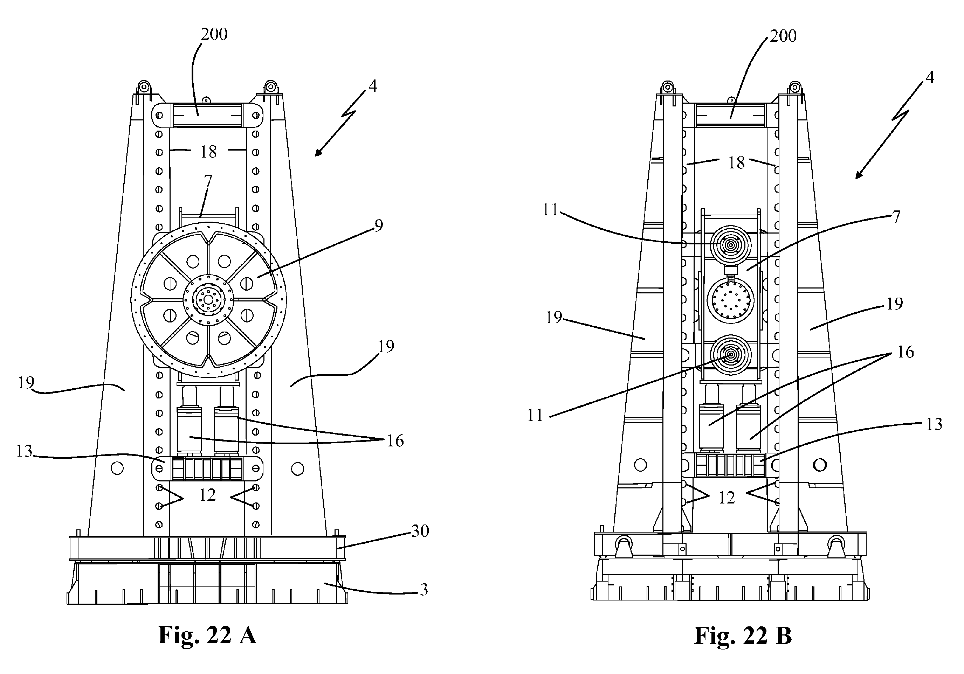

In accordance with the embodiment of figures 3, 4, 9, 10, 13-16, 21, 22, inside each seat 20 defined between the two towers 19 of a shoulder 4, the following are housed in sequence and in order starting from the base block: the reaction bar 13, two first movement actuators 16 and a hub-carrying group 7.

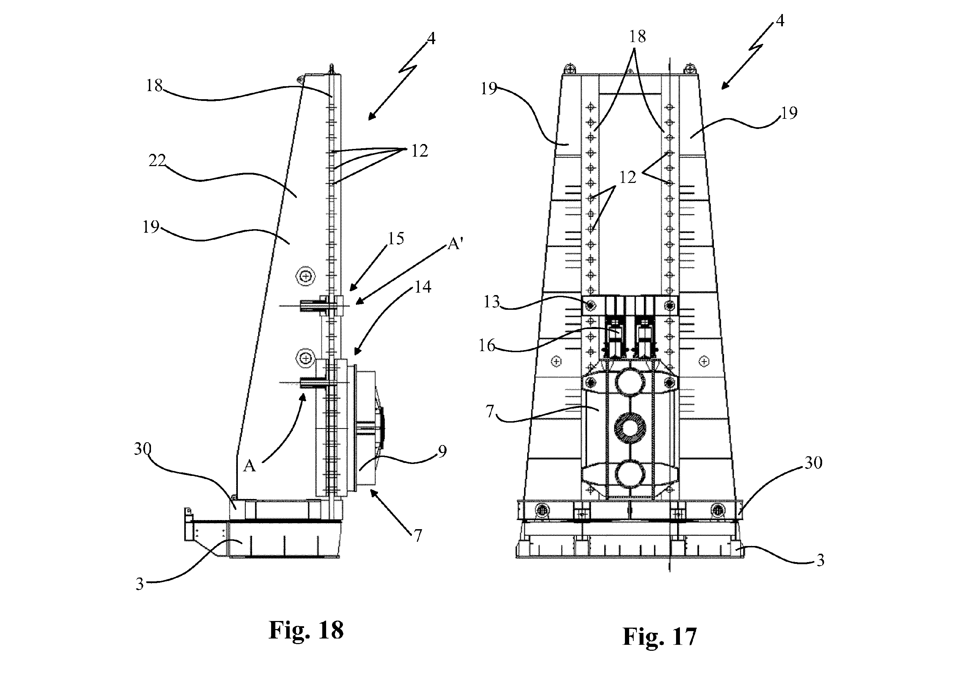

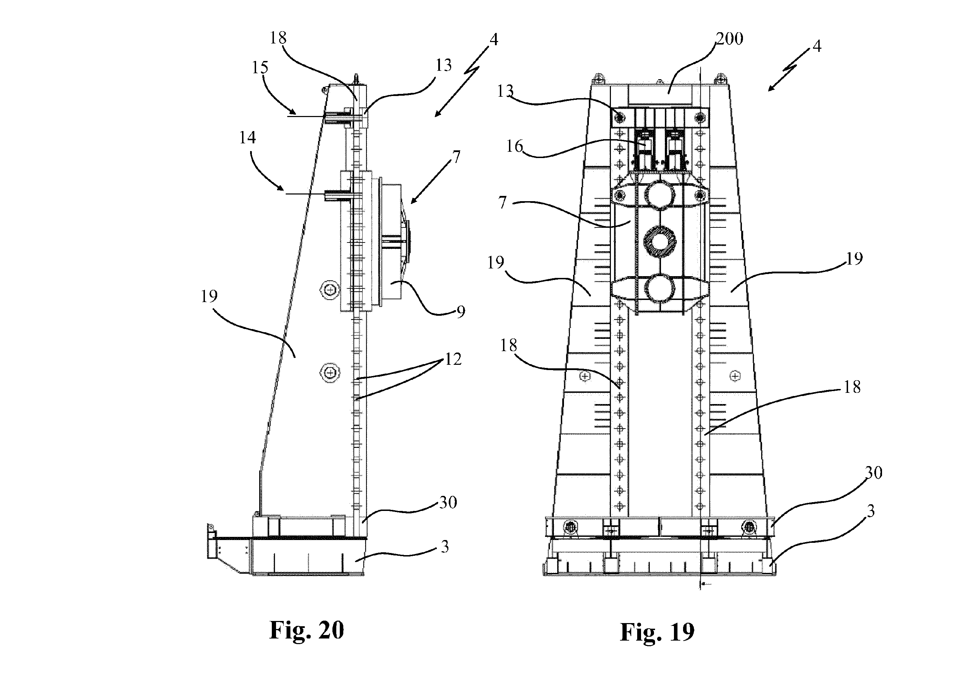

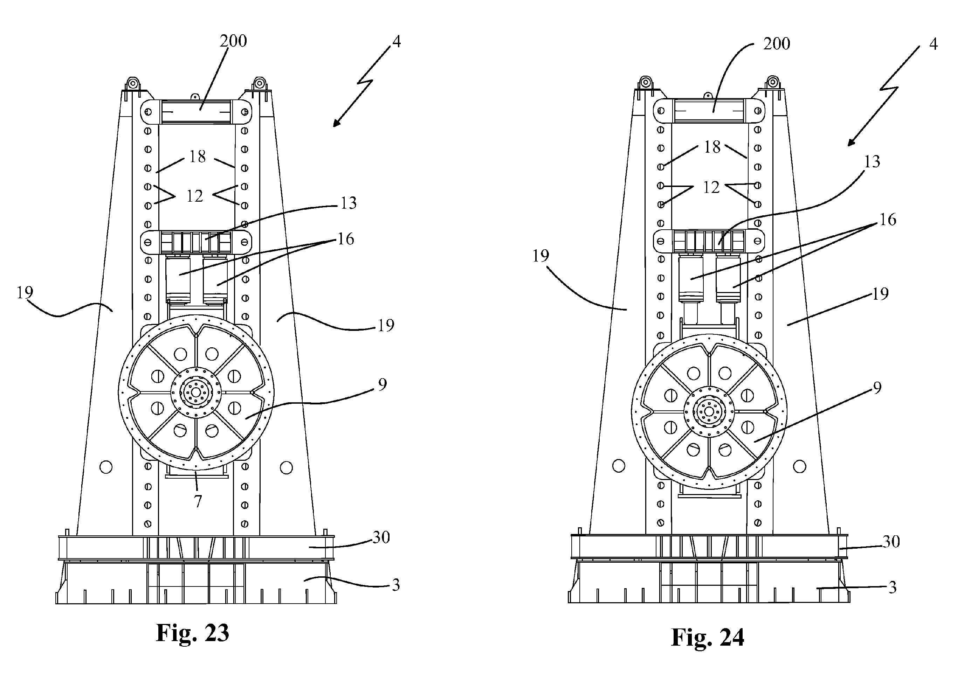

Otherwise, in accordance with the embodiment of figures 17-20, 23, 24 inside each seat 20 defined between the two towers 19 of a shoulder 4, the following are housed in sequence and in order starting from the base block: a hub-carrying group 7, two first movement actuators 16 and the reaction bar 13.

The two possibilities for mounting the hub-carrying group 7 and the reaction bar 13 confer to the apparatus 1, object of the present invention, a high versatility of adaptation for mounting reels 5 of different sizes.

In accordance with the first embodiment, the reaction bar 13 and the first movement actuators 16 move the hub-carrying group 7 away from the base block 2 and therefore do not allow picking up reels 5 with excessively low heights or small size reels, and thus provided with very small central rotation axis. On the other hand, such embodiment allows lifting the reels 5 up to very high elevations, i.e. with the hub-carrying group 7, which reaches up to the upper end of the towers 19, therefore being adapted to operate with reels with very large size.

In accordance with the second embodiment, the bulk of the reaction bar 13 and of the first movement actuators 16 is overturned towards the top of the seat 20 such that the hub-carrying group 7 is in a position closer to the base block 2.

Therefore, in accordance with this second embodiment, it is possible to pick up reels 5 even of very small size, and thus provided with very small rotation axis, allowing them to engage with the two hub-carrying groups 7 even close by the base block 2.

The first embodiment allows lifting reels 5 even of large size without employing overly high towers 19, whose bulk would obstruct the normal activity of the lateral cranes of the ship deck.

On the other hand, the second embodiment allows lifting reels 5, even of small size, to the height of alignment with the hub-carrying groups 7, preventing the use of spacers for lifting the supports saddles for the reels (with which they are loaded on the deck of the ship and placed between the shoulders of the apparatus).

The operations for overturning the movable support group between the two towers 19 constituted by the hub-carrying group 7, by the first movement actuators 16 and by the reaction bar 13, are easily obtained with FIFO logic. It is initially provided to remove the small upper reinforcing beam 200 placed to connect between the two towers 19, and then unthread the group from the seat by means of lifting of the crane, engaging on two eyebolts. At this point, the insertion is reversed of the sequence of the three members constituted by the hub-carrying group 7, by the first movement actuators 16 and by the reaction bar 13 and thus one easily passes from one configuration to another.

Also forming the object of the present invention is a method for loading a reel on an apparatus for unwinding flexible cables on seabeds, advantageously, but not in a limited manner, obtained according to the above-described characteristics; the same reference numbers will be maintained hereinbelow for simplicity of description.

Such method comprises the operative steps described hereinbelow.

First of all, a step is provided for moving apart the shoulders 4 of the apparatus 1 in order to allow the subsequent step of positioning the reel 5 to take place; such reel 5 has been previously advantageously mounted on a metalwork support saddle, between the spread shoulders 4 of the apparatus 1.

Once brought onto the deck of a ship by means of a wharf crane, the reel 5 mounted on its saddle is moved between the shoulders 4 of the apparatus 1 for example by means of the lateral crane of the deck or by means of a bridge crane.

At this point, there is the step of positioning the two hub-carrying groups 7 in a position aligned with the ends of the reel 5 mounted on the saddle.

Such step occurs according to the idea underlying the present invention by means of achieving the following stages in succession:
a first stage for the selective actuation, simultaneously for each shoulder 4, of the first or second locking means 14, 15 into the non-interference position B, B', freeing from an anchoring element 12 a corresponding first member selected from among the hub-carrying group 7 and the reaction bar 13;
a second stage for the actuation of the first movement actuators 16 in order to move the freed first member 7 or 13 by a segment equal to the distance D between two anchoring elements 12 in succession or to a multiple of such distance D;
a third stage for the actuation of the locking means 14, 15 correspondingly mounted on the freed first member 7 or 13, from the non-interference position B, B' to the interference position A, A', thus locking such previously freed first member at a subsequent anchoring element 12 arranged in the direction of movement Y;
a fourth stage for the actuation of the locking means 15, 14 correspondingly mounted on the second member 13, 7, i.e. the other member that has not been freed in the previous stage, into the non-interference position B', B, freeing such member from the relative anchoring element 12;
a fifth stage for the actuation of the first movement actuators 16 in order to move the freed second member 13, 7 by a segment equal to the distance between the two anchoring elements 12 in succession or to a multiple of such distance;
a sixth stage for the actuation of the locking means 15, 14 correspondingly mounted on the freed second member 13, 7, in order to bring them back into the interference position A', A, locking the freed second member 13, 7 at a subsequent anchoring element 12 in the direction of movement Y.

The first selective actuation stage will be selected for freeing the member that must be moved towards the alignment position and that, as a function of the elongated or retracted state of the first movement actuators 16, can be constituted by one of the two members from among the hub-carrying group 7 and the reaction bar 13. Starting from an initial situation with the first actuators 16 in retracted position, the member to be moved, and thus freed in advance, will be that which is closer to the alignment position, towards which one must turn in order to bring the reel 5 to engage with the hub-carrying groups 7.

The above-indicated stages of the positioning step can be cyclically repeated until the hub-carrying groups 7 are brought into a position substantially aligned with the ends of the reel 5.

Once the aforesaid alignment has been reached, there will be a step of mutual moving closer of the shoulders 4 with the engagement of the hub-carrying groups 7 in the ends of the reel 5. Such step will be obtained by actuating the second actuators 31 interposed between the base block 2 and the base 30 of the shoulder 4.

After having carried out a quick but rough adjustment of the position of the hub-carrying groups 7 with respect to the reel 5, a finer and more precise adjustment can be advantageously provided for the position of the hub-carrying group 7, wherein the latter is moved by the first actuators 16 into an intermediate position between two anchoring elements 12, which can be mechanically sealed in safe conditions, by screwing a ring nut on a thread (e.g. of trapezoidal type) obtained on the terminal part of the stem of the actuator 16 (which in such case is advantageously constituted by a hydraulic piston), thus to obtain a mechanical locking without using the hydraulic seal of the actuator 16 itself.

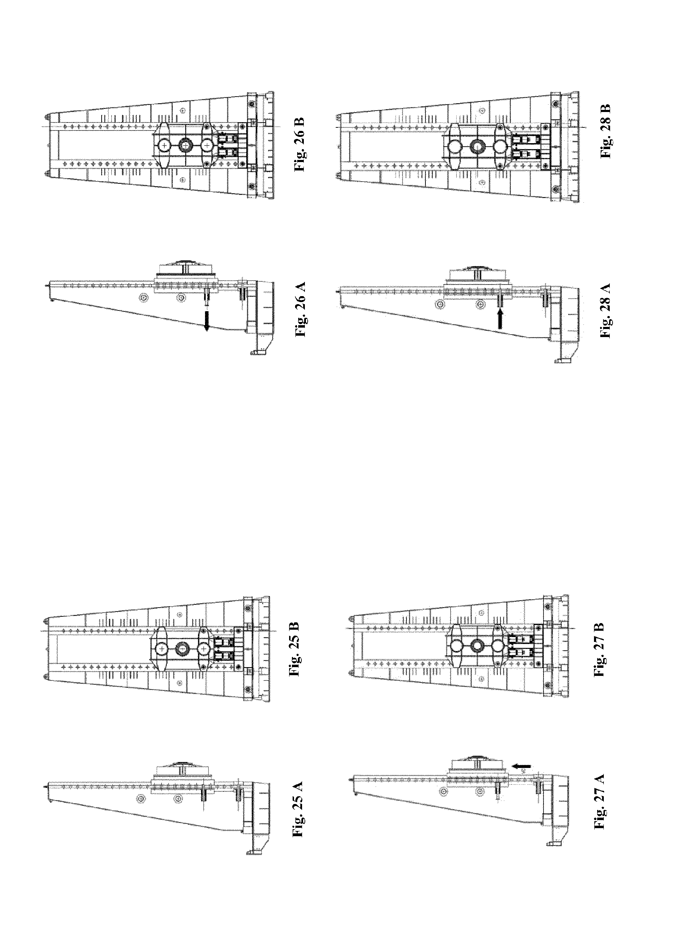

Figures 25-31 schematically illustrate an operating sequence aimed to lift the hub-carrying groups 7 towards the position of alignment with a reel (not shown).

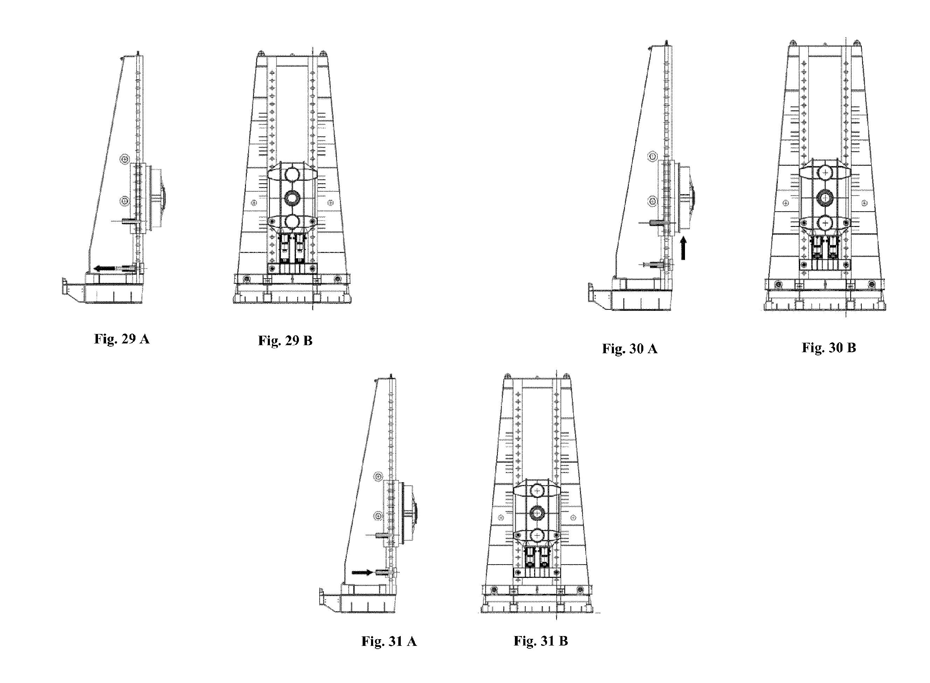

In accordance with such figures and with the above-indicated sequence of stages, starting from an initial situation with the first actuators 16 in retracted position (fig. 25), it is first provided to free the hub-carrying group 7 (placed in accordance with this embodiment on the upper part of the reaction bar 13, see fig. 26), to lift the same hub-carrying group 7 by actuating the first actuators 16 (see fig. 27), then to lock it in a new, higher position (e.g. higher by a segment equal to the distance between two holes 12 as indicated in fig. 28) and then to return the reaction bar 13 (placed as stated in this case on the lower part), freeing it first from the second locking means 15 (see fig. 29), then lifting it by an equal pitch with the first actuators 16 (fig. 30), before then returning to lock it in a higher position as indicated in fig. 31.

A logic control unit is advantageously provided for, connected to the first and the second actuators 16, 31 as well as to the first and second locking means 14, 15 in order to coordinate the above-listed operations in a correct operating sequence aimed to achieve the expected movement.

Preferably, diagnostic means are provided for, adapted to detect the position of the hub-carrying groups 7 and of the reaction bars 13 along the extension of the towers 19, in particular for defining the correct position of the locking means 14, 15 with respect to the anchoring elements 12 and in particular of the stems 27 of the cylinders with through stem with respect to the holes 12, so as to allow the correct insertion thereof at their interior.

For such purpose, capacitive sensors can be provided for, connected to the logic control unit and mounted on the hub-carrying groups 7 and/or on the reaction bars 13 adapted to read the same holes or equivalent signaling elements placed alongside the holes 12.

Otherwise, first actuators 16 can be used that consist of pistons feedbacked in position by means of a linear sensor, such as a magnetostrictive sensor, or by means of other equivalent sensors.

In any case, an encoder is also advantageously provided for, it too connected to the control unit and tied to the movement of the first actuators, for a detection of the absolute position thereof.

The finding thus conceived therefore attains the pre-established objects.

## Claims

1. Apparatus for unwinding flexible cables on seabeds, which comprises:
- a reel (5) for storing a wound flexible cable (6);
- a support structure (2) provided with a base block (3) and two shoulders (4), which rise from said base block (3) parallel and spaced apart from each other in a main vertical extension direction (Y);
- two hub-carrying groups (7), each of which is slidably guided along a corresponding said shoulder (4) in said vertical extension direction (Y), and is susceptible to be mechanically engaged with one end of said reel (5);
**characterized in that** it comprises:
- a plurality of anchoring elements (12) aligned along said vertical extension direction (Y);
- at least two movable reaction bars (13), each of which is slidably mechanically guided on a corresponding said shoulder (4) along said vertical extension direction (Y);
- two first locking means (14), each mounted on a corresponding said hub-carrying group (7) and able to be actuated to move between a first interference position (A), in which they intercept at least one anchoring element (12), constraining said hub-carrying group (7) to said shoulder (4) with respect to movements along said vertical extension direction (Y), and a first non-interference position (B), in which they are released from the anchoring elements (12), freeing said hub-carrying group (7) from said shoulder (4) with respect to movements along said vertical extension direction (Y);
- two second locking means (15), each mounted on a corresponding said reaction bar (13) and able to be actuated to move between a second interference position (A'), in which they intercept at least one anchoring element (12), locking said reaction bar (13) to said shoulder (4) with respect to movements along said vertical extension direction (Y), and a second non-interference position (B'), in which they are released from the anchoring elements (12), freeing said reaction bar (13) from said shoulder (4) with respect to movements along said vertical extension direction (Y);
- at least two first movement actuators (16), each of which is mounted between one said hub-carrying group (7) and one said corresponding reaction bar (13) in order to modify the distance between them with at least one of said first and second locking means (14, 15) in non-interference position (B, B').

2. Apparatus for unwinding flexible cables on seabeds according to claim 1, **characterized in that** said anchoring elements (12) consist of a plurality of aligned holes provided for on at least one wall (18) of each said shoulder (4), being substantially extended along said vertical extension direction (Y).

3. Apparatus for unwinding flexible cables on seabeds according to claim 1, **characterized in that** each said shoulder (4) is formed by two parallel towers (19) delimiting, together with said base block (3), a seat (20) in which said hub-carrying group (7) is housed, said towers (19) being provided with two first counter-facing sliding guides, in which said hub-carrying group (7) is slidably engaged.

4. Apparatus for unwinding flexible cables on seabeds according to claim 3, **characterized in that** each said reaction bar (13) is housed slidably engaged in a corresponding second sliding guide of said towers (19).

5. Apparatus for unwinding flexible cables on seabeds according to claim 1, **characterized in that** said first and second locking means (14, 15) each comprise at least one third actuator provided with fixed jacket (25) respectively integral with said hub-carrying group (7) and with said reaction bar (13), and with a movable stem (27) carrying at least one associated stop element (28) able to be actuated to project towards said shoulder (4) in order to interfere with said anchoring elements (12) when said first and second locking means (14, 15) are respectively actuated to move into said first and/or second interference position (A, A').

6. Apparatus for unwinding flexible cables on seabeds according to claim 1, **characterized in that** each said shoulder (4) can be moved towards or away from the other shoulder (4) by means of at least one second actuator (31) interposed between said fixed base block (3) and said shoulder (4) slidably movable on said base block (3).

7. Apparatus for unwinding flexible cables on seabeds according to claims 3 and 4, **characterized in that** inside each said seat (20), the following are housed in sequence and in order starting from said base block (3): one said reaction bar (13), at least one said first movement actuator (16) and one said first hub-carrying group (7).

8. Apparatus for unwinding flexible cables on seabeds according to claims 3 and 4, **characterized in that** inside each said seat (20), the following are housed in sequence and in order starting from said base block (3): one said first hub-carrying group (7), at least one said first movement actuator (16) and one said reaction bar (13).

9. Apparatus for unwinding flexible cables on seabeds according to claim 3 **characterized in that** it comprises two projecting walls (18) each fixed to one said tower (19) being extended inside said seat (20) towards the other tower (19), said projecting walls (18) each having associated said plurality of aligned anchoring elements (12), being extended along said vertical direction (Y) and being housed between first and second plates (23, 24) that are spaced apart and parallel and laterally fixed respectively to said hub-carrying group (7) and to said reaction bar (13) in order to guide the movement thereof along said vertical direction (Y), said first and said second locking means (14, 15) being mounted respectively on at least one of said first and second plates (23, 24), at said anchoring elements (12) in order to be engaged therewith when said first and second locking means (14, 15) are actuated respectively to move into said first and/or second interference position (A, A').

10. Method for loading a reel on an apparatus for unwinding flexible cables on seabeds according to claim 1, which comprises the following operative steps:
- a step of moving apart said shoulders (4);
- a step of positioning said reel (5) mounted on a metalwork support saddle, in particular by means of a crane, between said spread shoulders (4);
- a step of positioning said hub-carrying groups (7) in an aligned position with the ends of said reel (5) by means of:
a first stage for the selective actuation, simultaneously for each shoulder (4), of said first or said second locking means (14, 15) into said non-interference position, freeing from an anchoring element (12) a corresponding first member selected from among said hub-carrying group (7) and said reaction bar (13);
a second stage for the actuation of said first movement actuators (16) in order to move said freed first member by a segment equal to the distance between two said anchoring elements (12) in succession or to a multiple of such distance;
a third stage for the actuation of the locking means (14, 15) correspondingly mounted on said freed first member into said interference position, locking said freed first member in a subsequent anchoring element (12) in the direction of said movement;
a fourth stage for the actuation of the locking means (14, 15) correspondingly mounted on the second member that has not been freed in the previous stage into said non-interference position, freeing it from one said corresponding anchoring element (12);
a fifth stage for the actuation of said first movement actuators (16) in order to move said freed second member by a segment equal to the distance between two said anchoring elements (12) in succession or to a multiple of such distance;
a sixth stage for the actuation of the locking means (14, 15) correspondingly mounted on said freed second member into said interference position, locking said freed second member in a subsequent anchoring element (12) in the direction of said movement;
- a step for the cyclic repetition of the stages of said positioning step, until said hub-carrying group (7) is brought into a position substantially aligned with the ends of said reel (5).
- a step of bringing together the shoulders (4) with engagement of said hub-carrying groups (7) in the ends of said reel (5).

11. Method for loading a reel (5) according to claim 10, which provides for a step of fine regulation of the position of said hub-carrying group (7), in which the latter is moved by said first actuators (16) into an intermediate position between two anchoring elements (12), in particular being mechanically lockable in such position.

## Patentansprüche

1. Vorrichtung zum Abwickeln von flexiblen Kabeln auf Meeresböden, die Folgendes umfasst:
- eine Spule (5) zum Lagern eines aufgewickelten flexiblen Kabels (6);
- eine mit einem Unterbau (3) und zwei Schulterteilen (4), die sich auf diesem Unterbau (3) parallel und im Abstand zueinander in einer vorrangigen vertikalen Verlaufsrichtung (Y) erheben, ausgestattete Trägerstruktur (2);
- zwei Nabenträgergruppen (7), von denen jede gleitend entlang eines entsprechenden genannten Schulterteils (4) in der genannten vertikalen Verlaufsrichtung (Y) geführt wird und geeignet ist, mechanisch an einem Ende der genannten Spule (5) eine mechanische Verbindung einzugehen; **dadurch gekennzeichnet, dass** sie Folgendes umfasst:
- eine Vielzahl von entlang der genannten vertikalen Verlaufsrichtung (Y) gefluchteten Verankerungselementen (12);
- mindestens zwei bewegliche Reaktionsstangen (13), von denen jede gleitend mechanisch auf jeweils einem genannten Schulterteil (4) entlang der genannten vertikalen Verlaufsrichtung (Y) geführt wird;
- zwei erste Befestigungsvorrichtungen (14), von denen jede auf einer entsprechenden genannten Nabenträgergruppe (7) montiert ist und betätigt werden kann, um sich zwischen einer ersten Überlagerungsposition (A), in der sie mindestens ein Verankerungselement (12) aufnehmen und die genannte Nabenträgergruppe (7) an dem genannten Schulterteil (4) im Verhältnis zu Versetzungen entlang der genannten vertikalen Verlaufsachse (Y) befestigen, und einer ersten nicht überlagerten Position (B), in der sie von den Verankerungselementen (12) gelöst sind und die genannte Nabenträgergruppe (7) von dem genannten Schulterteil (4) im Verhältnis zu Versetzungen entlang der genannten vertikalen Verlaufsrichtung (Y) befreien;
- zwei zweite Befestigungsvorrichtungen (15), von denen jede auf einer entsprechenden genannten Reaktionsstange (13) montiert ist und die betätigt werden können, um sich zwischen einer zweiten Überlagerungsposition (A'), in der sie mindestens ein Verankerungselement (12) aufnehmen und so die genannte Reaktionsstange (13) an dem genannten Schulterteil (4) im Verhältnis zu Versetzungen entlang der genannten vertikalen Verlaufsachse (Y) blockieren, und einer zweiten nicht überlagerten Position (B'), in der sie von den Verankerungselementen (12) gelöst sind und die genannte Reaktionsstange (13) von dem genannten Schulterteil (4) im Verhältnis zu Versetzungen entlang der genannten vertikalen Verlaufsrichtung (Y) befreien;
- mindestens zwei erste Bewegungsantriebe (16), von denen jeder zwischen einer genannten Nabenträgergruppe (7) und einer genannten entsprechenden Reaktionsstange (13) montiert ist, um den zwischen diesen verlaufenden Abstand mit mindestens einem der genannten ersten und zweiten Befestigungsvorrichtungen (14, 15) in nicht überlagerter Position (B, B') zu ändern.

2. Vorrichtung zum Abwickeln von flexiblen Kabeln auf Meeresböden nach Anspruch 1, **dadurch gekennzeichnet, dass** die genannten Verankerungselemente (12) aus einer Vielzahl von auf mindestens einer Wand (18) jedes der genannten Schulterteile (4) vorgesehenen gefluchteten Öffnungen bestehen, die sich im Wesentlichen entlang der genannten vertikalen Verlaufsrichtung (Y) ausdehnen.

3. Vorrichtung zum Abwickeln von flexiblen Kabeln auf Meeresböden nach Anspruch 1, **dadurch gekennzeichnet**, das jedes der Schulterteile (4) aus zwei parallelen Türmen (19) besteht, die zusammen mit dem genannten Unterbau (3) einen Sitz (20) begrenzen, in dem die genannte Nabenträgergruppe (7) untergebracht ist, wobei die genannten Türme (19) mit zwei ersten, sich gegenüber liegenden Gleitführungen ausgestattet ist, in denen die genannte Nabenträgergruppe (7) gleitend gelagert ist.

4. Vorrichtung zum Abwickeln von flexiblen Kabeln auf Meeresböden nach Anspruch 3, **dadurch gekennzeichnet, dass** jede genannte Reaktionsstange (13) gleitend im Eingriff in einer entsprechenden zweiten Gleitführung der genannten Türme (19) gelagert ist.

5. Vorrichtung zum Abwickeln von flexiblen Kabeln auf Meeresböden nach Anspruch 1, **dadurch gekennzeichnet, dass** die genannten ersten und zweiten Befestigungsvorrichtungen (14, 15) jeweils mindestens einen dritten, mit einer festen Hülse (25) ausgestatteten Stellantrieb umfassen, die jeweils fest mit der genannten Nabenträgergruppe (7) und der genannten Reaktionsstange (13) verbunden ist, und mit einem beweglichen Schaft (27), der mindestens ein mit ihm verbundenes Stoppelement (28) trägt, das betätigt werden kann, um in Richtung des genannten Schulterteils (4) vorzustehen und sich mit den genannten Verankerungselementen (12) zu überlagern, wenn die genannten ersten und zweiten Befestigungsvorrichtungen (14, 15) jeweils betätigt werden, um sich in die genannte erste bzw. zweite Überlagerungsposition (A , A') zu begeben.

6. Vorrichtung zum Abwickeln von flexiblen Kabeln auf Meeresböden nach Anspruch 1, **dadurch gekennzeichnet, dass** jedes genannte Schulterteil (4) durch Annäherung oder Auseinanderbewegung im Verhältnis zum anderen Schulterteil (4) mittels mindestens eines zweiten Stellantriebs (31) bewegt werden kann, der zwischen dem genannten festen Unterbau (3) und dem genannten auf dem genannten Unterbau (3) beweglich gleitenden Schulterteil (4) eingefügt wird.

7. Vorrichtung zum Abwickeln von flexiblen Kabeln auf Meeresböden nach Anspruch 3 und 4, **dadurch gekennzeichnet, dass** im Inneren jedes genannten Sitzes (20) in Folge und der Reihenfolge nach ab dem genannten Unterbau (3) folgende Elemente untergebracht sind: eine genannte Reaktionsstange (13), mindestens ein erster Bewegungsantrieb (16) und eine genannte erste Nabenträgergruppe (7):

8. Vorrichtung zum Abwickeln von flexiblen Kabeln auf Meeresböden nach Anspruch 3 und 4, **dadurch gekennzeichnet, dass** im Inneren jedes genannten Sitzes (20) in Folge und der Reihenfolge nach ab dem genannten Unterbau (3) folgende Elemente untergebracht sind: eine genannte erste Nabenträgergruppe (7), mindestens ein erster Bewegungsantrieb (16) und eine genannte erste Reaktionsstange (13).

9. Vorrichtung zum Abwickeln von flexiblen Kabeln auf Meeresböden nach Anspruch 3, **dadurch gekennzeichnet, dass** sie zwei vorstehende Wände (18) umfasst, die jede an einem genannten Turm (19) befestigt sind und sich im Inneren des genannten Sitzes (20) zum anderen Turm (19) erstrecken, wobei die genannten vorstehenden Wände (18) jede mit der genannten Vielzahl von gefluchteten Verankerungselementen (12) verbunden sind, die entlang der genannten vertikalen Richtung (Y) verlaufen und die zwischen den ersten und zweiten im Abstand befindlichen und parallelen Platten (23, 24) untergebracht ist, die im Verhältnis zu der genannten Nabenträgergruppe (7) und der genannten Reaktionsstange (13) seitlich angebracht sind, um deren Verschiebung entlang der genannten vertikalen Richtung (Y) zu führen, wobei die genannten ersten und zweiten Befestigungsvorrichtungen (14, 15) jeweils auf mindestens einer der genannten ersten und zweiten Platten (23, 24) auf den genannten Verankerungselementen (12) montiert sind, um mit diesen ein Formverhältnis einzugehen, wenn die genannten ersten und zweiten Befestigungsvorrichtungen (14, 15) betätigt werden, um sich jeweils in die genannte erste bzw. zweite Überlagerungsposition (A, A') zu begeben.

10. Verfahren zum Laden einer Spule auf eine Vorrichtung, um flexible Kabel auf Meeresböden abzuwickeln nach Anspruch 1, das die folgenden Schritte umfasst:
- eine Phase der Auseinanderbewegung der genannten Schulterteile (4);
- eine Phase der Positionierung der genannten, auf einem massiven Trägersattel aus Metall montierten Spule (5), insbesondere mit einem Kran, zwischen den verbreiterten genannten Schulterteilen (4);
- eine Phase der Positionierung der genannten Nabenhaltergruppen (7) in gefluchteter Position mit den Enden der genannten Spule (5) mittels:
einer ersten Stufe der selektiven Betätigung gleichzeitig für jedes Schulterteil (4) der genannten ersten oder genannten zweiten Befestigungsvorrichtungen (14, 15) in der genannten nicht überlagerten Position, indem ein entsprechendes erstes Organ zwischen der genannten Nabenträgergruppe (7) und der genannten Reaktionsstange (13) von einem Verankerungselement (12) befreit wird;
einer zweiten Betätigungsstufe der genannten ersten Bewegungsantriebe (16) zum Bewegen des genannten ersten befreiten Organs um eine Strecke, die dem Abstand zwischen den beiden genannten Verankerungselementen (12) in Folge oder einem Vielfachen davon entspricht;
einer dritten Betätigungsstufe der Befestigungsvorrichtungen (14, 15), die entsprechend auf dem genannten ersten befreiten Organ in der genannten überlagerten Position montiert sind und das genannte erste befreite Organ in einem nachfolgenden Verankerungselement (12) in Richtung der genannten Bewegung blockieren;
einer vierten Betätigungsstufe der entsprechend auf dem zweiten Organ in der genannten nicht überlagerten Position montierten Befestigungsvorrichtungen (14, 15), das nicht während der vorangegangenen Stufe befreit wurde, so dass es von einem genannten entsprechenden Verankerungselement (12) befreit wird;
einer fünften Betätigungsstufe der genannten ersten Bewegungsantriebe (16) zum Bewegen des genannten ersten befreiten Organs um eine Strecke, die dem Abstand zwischen den beiden genannten Verankerungselementen (12) in Folge oder einem Vielfachen davon entsprich;
einer sechsten Betätigungsstufe der Befestigungsvorrichtungen (14, 15), die entsprechend auf dem genannten befreiten zweiten Organ in der genannten überlagerten Position montiert sind und das genannte befreite zweite Organ in einem nachfolgenden Verankerungselement (12) in Richtung der genannten Bewegung blockieren;
- eine Phase der zyklischen Wiederholung der genannten Positionierungsphase bis die genannte Nabenträgergruppe (7) in eine im Wesentlichen mit den Enden der genannten Spule (5) gefluchtete Position gebracht wird.
- eine Phase der Annäherung der Schulterteile (4) durch formschlüssige Verbindung der genannten Nabenträgergruppen (7) in den Enden der genannten Spule (5).

11. Verfahren zum Laden einer Spule (5) nach Anspruch 10, der eine Phase der Feineinstellung der Position der genannten Nabenträgergruppe (7) vorsieht, bei der Letztere von den genannten ersten Stellantrieben (16) in eine Zwischenposition zwischen zwei Verankerungselementen (12) verschoben wird und insbesondere mechanisch in dieser Position blockiert werden kann.

## Revendications

1. Appareil permettant de dérouler des câbles souples sur fonds marins, comprenant :
- un dévidoir (5) pour le stockage d'un câble flexible enroulé (6) ;
- une structure de support (2) munie d'un bâti (3) et de deux épaulements (4), qui se dressent à partir dudit bâti (3) parallèles et espacés l'un de l'autre dans une direction de développement verticale prédominante (Y) ;
- deux groupes porte-moyeu (7), chacun desquels est guidé par coulissement le long d'un épaulement correspondant (4) dans ladite direction de développement verticale (Y), et susceptible de s'engager mécaniquement dans une extrémité dudit dévidoir (5) ; **caractérisé en ce qu'**il comprend :
- une pluralité d'éléments d'ancrage (12) alignés le long de ladite direction de développement verticale (Y) ;
- au moins deux barres de réaction (13) mobiles, chacune desquelles est guidée mécaniquement par coulissement sur l'épaulement (4) correspondant, le long de ladite direction de développement verticale (Y) ;
- deux premiers moyens de blocage (14), chacun monté sur un groupe porte-moyeu (7) correspondant et actionnables afin de se déplacer entre une première position d'interférence (A), où ils interceptent au moins un élément d'ancrage (12) en engageant ledit groupe porte-moyeu (7) audit épaulement (4) par rapport à des déplacements le long de ladite direction de développement verticale (Y), et une première position de non-interférence (B), où ils sont dégagés des éléments d'ancrage (12), libérant ledit groupe porte-moyeu (7) dudit épaulement (4) par rapport à des déplacements le long de ladite direction de développement verticale (Y) ;
- deux seconds moyens de blocage (15), chacun monté sur une barre de réaction (13) correspondante et actionnables afin de se déplacer entre une seconde position d'interférence (A'), où ils interceptent au moins un élément d'ancrage (12) en bloquant ladite barre de réaction (13) audit épaulement (4) par rapport à des déplacements le long de ladite direction de développement verticale (Y), et une seconde position de non-interférence (B'), où ils sont dégagés des éléments d'ancrage (12), libérant ladite barre de réaction (13) dudit épaulement (4) par rapport à des déplacements le long de ladite direction de développement verticale (Y) ;
- au moins deux premiers actionneurs de mouvement (16), chacun desquels est monté entre un groupe porte-moyeu (7) et une barre de réaction (13) correspondante pour modifier la distance qui sépare ces derniers avec au moins un desdits premiers et seconds moyens de blocage (14, 15) en position de non-interférence (B, B').

2. Appareil permettant de dérouler des câbles souples sur fonds marins selon la revendication 1, **caractérisé en ce que** lesdits éléments d'ancrage (12) sont constitués d'une pluralité de trous alignés prévus sur au moins une paroi (18) de chacun desdits épaulements (4), d'étendant essentiellement le long de ladite direction de développement verticale (Y).

3. Appareil permettant de dérouler des câbles souples sur fonds marins selon la revendication 1, **caractérisé en ce que** chacun desdits épaulements (4) est formé de deux tours (19) parallèles de délimitation, avec ledit bâti (3), d'un logement (20), où est logé ledit groupe porte-moyeu (7), lesdites tours (19) étant munies de deux premiers rails de coulissement positionnés face à face, où est engagé par coulissement ledit groupe porte-moyeu (7).

4. Appareil permettant de dérouler des câbles souples sur fonds marins selon la revendication 3, **caractérisé en ce que** chacune desdites barres de réaction (13) est logée et engagée par coulissement dans un second rail de coulissement correspondant desdites tours (19).

5. Appareil permettant de dérouler des câbles souples sur fonds marins selon la revendication 1, **caractérisé en ce que** lesdits premiers et seconds moyens de blocage (14, 15) comprennent chacun au moins un troisième actionneur muni d'une chemise fixe (25) respectivement solidaire audit groupe porte-moyeu (7) et à ladite barre de réaction (13), et d'une tige (27) mobile porteuse associée au moins à un élément d'arrêt (28) actionnable afin de dépasser vers ledit épaulement (4) pour interférer avec lesdits éléments d'ancrage (12) quand lesdits premiers et seconds moyens de blocage (14, 15) sont actionnés respectivement pour se déplacer dans ladite première et/ou seconde position d'interférence (A, A').

6. Appareil permettant de dérouler des câbles souples sur fonds marins selon la revendication 1, **caractérisé en ce que** chacun desdits épaulements (4) peut se déplacer pour se rapprocher ou s'éloigner par rapport à l'autre épaulement (4) au moyen d'au moins un second actionneur (31) interposé entre ledit bâti (3) fixe et ledit épaulement (4) mobile par coulissement sur ledit bâti (3).

7. Appareil permettant de dérouler des câbles souples sur fonds marins selon les revendications 3 et 4, **caractérisé en ce qu'**à l'intérieur de chacun desdits logements (20) sont logés en séquence et dans l'ordre à partir dudit bâti (3) : une desdites barres de réaction (13), au moins un desdits premiers actionneurs de mouvement (16) et un desdits premiers groupes porte-moyeu (7).

8. Appareil permettant de dérouler des câbles souples sur fonds marins selon les revendications 3 et 4, **caractérisé en ce qu'**à l'intérieur de chacun desdits logements (20) sont logés en séquence et dans l'ordre à partir dudit bâti (3) : un desdits premiers groupes porte-moyeu (7), au moins un desdits premiers actionneurs de mouvement (16) et une desdites barres de réaction (13).

9. Appareil permettant de dérouler des câbles souples sur fonds marins selon la revendication 3, **caractérisé en ce qu'**il comprend deux parois en saillie (18) chacune étant fixée à l'une desdites tours (19) et s'étendant à l'intérieur dudit logement (20) vers l'autre tour (19), chacune desdites parois en saillie (18) étant associée à ladite pluralité d'éléments d'ancrage (12) alignés, se développant le long de ladite direction verticale (Y) et étant logée entre des premières et des secondes plaques (23, 24) espacées et parallèles fixées latéralement par rapport audit groupe porte-moyeu (7) et à ladite barre de réaction (13) pour guider son déplacement de long de ladite direction verticale (Y), lesdits premiers et seconds moyens de blocage (14, 15) étant respectivement montés sur au moins une desdites premières et secondes plaques (23, 24), au niveau desdits éléments d'ancrage (12) pour s'engager avec ces derniers quand lesdits premiers et seconds moyens de blocage (14, 15) sont respectivement actionnés pour se déplacer dans ladite première et/ou seconde position d'interférence (A, A').

10. Procédé de chargement d'un dévidoir sur un appareil permettant de dérouler des câbles souples sur fonds marins selon la revendication 1, comprenant les phases opérationnelles suivantes :
- une phase d'éloignement desdits épaulements (4) ;
- une phase de positionnement dudit dévidoir (5) monté sur un berceau de support en charpente métallique, notamment au moyen d'une grue, entre lesdits épaulements (4) élargis ;
- une phase de positionnement desdits groupes porte-moyeu (7) en position alignée sur les extrémités dudit dévidoir (5) à travers :
un premier stade d'actionnement sélectif, simultanément pour chaque épaulement (4), desdits premiers et seconds moyens de blocage (14, 15) dans ladite position de non-interférence, libérant d'un élément d'ancrage (12) un premier organe correspondant entre ledit groupe porte-moyeu (7) et ladite barre de réaction (13) ;
un deuxième stade d'actionnement desdits premiers actionneurs de mouvement (16) pour actionner ledit premier organe libéré sur une partie égale à la distance qui sépare deux desdits éléments d'ancrage (12) en succession ou à un multiple de ladite distance ;
un troisième stade d'actionnement des moyens de blocage (14, 15) montés en correspondance sur ledit premier organe libéré, dans ladite position d'interférence, bloquant ledit premier organe libéré dans un élément d'ancrage (12) suivant, en direction dudit mouvement ;
un quatrième stade d'actionnement des moyens de blocage (14, 15) montés en correspondance sur le second organe qui n'avait pas été libéré pendant le stade précédent, dans ladite position de non-interférence, le libérant d'un desdits éléments d'ancrage (12) correspondants ;
un cinquième stade d'actionnement desdits premiers actionneurs de mouvement (16) pour actionner ledit second organe libéré sur une partie égale à la distance qui sépare deux desdits éléments d'ancrage (12) en succession ou à un multiple de ladite distance ;
un sixième stade d'actionnement des moyens de blocage (14, 15) montés en correspondance sur ledit second organe libéré, dans ladite position d'interférence bloquant ledit second organe libéré dans un élément d'ancrage (12) suivant, en direction dudit mouvement ;
- une phase de répétition cyclique des stades de ladite phase de positionnement jusqu'à amener ledit groupe porte-moyeu (7) dans une position essentiellement alignée sur les extrémités dudit dévidoir (5).
- une phase de rapprochement des épaulements (4) avec l'enclenchement desdits groupes porte-moyeu (7) dans les extrémités dudit dévidoir (5).

11. Procédé de chargement d'un dévidoir (5) selon la revendication 10, prévoyant une phase de réglage précis de la position dudit groupe porte-moyeu (7), où ce dernier est déplacé par lesdits premiers actionneurs (16) dans une position intermédiaire entre deux éléments d'ancrage (12), où il peut être notamment bloqué mécaniquement.
